(19) Europäisches Patentamt
European Patent Office
Office européen des brevets

(11) **EP 2 914 473 B1**

(12) **FASCICULE DE BREVET EUROPEEN**

(45) Date de publication et mention de la délivrance du brevet:
**24.08.2016 Bulletin 2016/34**

(21) Numéro de dépôt: **13801620.9**

(22) Date de dépôt: **29.10.2013**

(51) Int Cl.:
**B62D 5/04** *(2006.01)*

(86) Numéro de dépôt international:
**PCT/FR2013/052585**

(87) Numéro de publication internationale:
**WO 2014/068243 (08.05.2014 Gazette 2014/19)**

(54) **PROCÉDÉ D'ASSERVISSEMENT DE DIRECTION ASSISTÉE ASSURANT UNE PROTECTION INFORMATIQUE DES BIELLETTES DE DIRECTION**

STEUERUNGSVERFAHREN FÜR SERVOLENKUNG ZUR SICHERSTELLUNG DES COMPUTERGESTÜTZTEN SCHUTZES DER LENKUNGSSPURSTANGEN

POWER-ASSISTED STEERING CONTROL METHOD ENSURING THE COMPUTERISED PROTECTION OF THE STEERING TIE-RODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2012 FR 1260425**

(43) Date de publication de la demande:
**09.09.2015 Bulletin 2015/37**

(73) Titulaire: **JTEKT Europe**
**69540 Irigny (FR)**

(72) Inventeur: **LENGRAIS, Guillaume**
**F-69003 Lyon (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 1 772 349**

**Description**

La présente invention se rapporte au domaine général des dispositifs de direction assistée destinés à des véhicules de toutes sortes.

Usuellement, les dispositifs de direction comprennent un volant de conduite qui permet au conducteur d'agir sur une colonne de direction, elle-même couplée, par un pignon, à une crémaillère de direction qui est montée coulissante dans un carter de direction et dont les extrémités sont raccordées à des biellettes qui viennent en prise sur les porte-fusées portant les roues directrices du véhicule.

En général, de tels dispositifs de direction disposent également d'un module d'assistance comprenant un moteur d'assistance, par exemple électrique, conçu pour transmettre, par exemple *via* un réducteur à vis sans fin et roue tangente, un couple d'assistance au pignon.

L'une des difficultés de réalisation des dispositifs de direction connus tient à la configuration et au dimensionnement des biellettes de direction, qui doivent satisfaire en pratique à deux critères antinomiques.

En effet, lesdites biellettes doivent tout d'abord présenter une résistance à la déformation plastique, et plus particulièrement au flambage, qui soit suffisante pour assurer sans dommage toutes les manoeuvres usuelles, et notamment les manoeuvres de dégagement permettant d'extraire le véhicule d'une situation de stationnement contre un obstacle ou d'une situation d'enlisement.

Cependant, ces mêmes biellettes doivent également rester suffisamment sensibles au flambage pour pouvoir servir, en cas de choc, d'éléments "fusibles" sur lesquels se concentre la déformation, et ce afin de pouvoir préserver les autres organes de la chaîne cinématique du dispositif de direction lors d'un accident.

Les objets assignés à l'invention visent par conséquent à proposer une nouvelle solution permettant de satisfaire à ces exigences contradictoires.

Le document EP-1 772 349 est considéré comme l'art antérieur le plus proche et décrit le préambule de la revendication 1.

Les objets assignés à l'invention sont atteints au moyen d'un procédé d'asservissement pour module d'assistance de direction, ledit module d'assistance comportant au moins un moteur d'assistance conçu pour fournir un couple d'assistance destiné à venir s'ajouter à un couple volant qui est exercé par le conducteur sur le volant de conduite de la direction, ledit procédé comprenant une étape (a) d'évaluation du couple volant au cours de laquelle on recueille un signal indicateur représentatif de l'intensité du couple volant exercé par le conducteur sur le volant de conduite, ledit procédé étant caractérisé en ce qu'il comprend une étape (b) de surveillance au cours de laquelle on compare le signal indicateur, représentatif de l'intensité du couple volant, à un seuil d'alerte prédéterminé, puis, si ledit signal indicateur devient supérieur ou égal audit seuil d'alerte, une étape (c) de réduction d'assistance au cours de laquelle on réduit l'intensité du couple d'assistance fourni par le moteur d'assistance, de telle sorte que la somme du couple volant et du couple d'assistance reste inférieure ou égale à un couple de manoeuvre critique prédéterminé.

Les objets assignés à l'invention sont également atteints au moyen d'un module d'assistance de direction comprenant un calculateur programmé pour mettre en oeuvre un procédé d'asservissement selon l'invention, ainsi qu'au moyen d'un véhicule automobile équipé d'un tel module d'assistance.

Les objets assignés à l'invention sont enfin atteints au moyen d'un support de données lisible par un ordinateur et comprenant des éléments de code d'un programme informatique conçu pour mettre en oeuvre un procédé d'asservissement de module de direction selon l'invention lorsque ledit programme est exécuté par un ordinateur.

Avantageusement, l'invention se propose donc, de manière générale, de créer une forme d'interaction de sécurité entre d'une part le module électronique de commande qui asservit le dispositif de direction assistée et d'autre part les organes mécaniques effecteurs dudit dispositif de direction, interaction qui permet d'assouplir le critère de dimensionnement mécanique desdits organes vis-à-vis de leur résistance à la déformation.

En effet, l'invention permet de doser, dans les situations de conduite prévisibles, et plus particulièrement dans certaines situations de stationnement, le couple d'assistance, dont la consigne est fixée par ledit module d'assistance, afin que le couple de manoeuvre total, qui est appliqué aux organes mécaniques de la chaîne cinématique du dispositif de direction, et qui résulte de la somme d'une part du couple volant, imprimé au volant de conduite par la force musculaire du conducteur, et d'autre part du couple d'assistance, créé artificiellement par le moteur d'assistance (par exemple mécanique ou hydraulique) et venant renforcer ledit couple volant, ne dépasse en aucune circonstance une valeur critique qui provoquerait la déformation plastique irréversible de l'un ou l'autre desdits organes.

Plus particulièrement, l'invention permet de compenser, le cas échéant, un excès du couple volant manuel par une diminution du couple artificiel d'assistance, de manière à borner le couple de manoeuvre total pour le maintenir en permanence en deçà de la limite mécaniquement admissible par les organes de direction.

Par conséquent, les organes mécaniques constitutifs du dispositif de direction, et plus particulièrement les biellettes de direction, pourront être sans risque dimensionné(e)s, voire sous-dimensionné(e)s, selon le critère de "fusibilité", c'est-à-dire de sorte à pouvoir se déformer facilement et efficacement en cas d'accident afin de préserver le reste de la chaîne cinématique de la direction, charge incombant désormais au module électronique d'asservissement embarqué d'empêcher, dans les situations de conduite normales, la survenance d'un effort excédant les capacités de résistance d'un tel dimensionnement.

En d'autres termes, grâce à l'invention, il n'est plus nécessaire de faire reposer chacune des fonctions, en résistance fonctionnelle d'une part, et en fusibilité d'autre part, uniquement sur le dimensionnement des organes de direction.

Désormais, on peut en effet privilégier l'adjonction au module d'assistance d'une fonction d'analyse et d'adaptation dynamique du système de direction, qui permet d'adapter de manière évolutive, en fonction des circonstances, la façon dont sont sollicités mécaniquement les organes de direction, de telle sorte que lesdits organes ne soient pas exposés, lors du fonctionnement normal et prévisible de la direction, à une situation qui risquerait de provoquer leur déformation plastique.

Ainsi, l'invention permet en quelque sorte de substituer à une protection passive contre la déformation, de type exclusivement mécanique, une protection active contre la déformation, de type protection "intelligente".

En pratique, cela peut avantageusement revenir à assouplir le critère de dimensionnement en résistance strictement mécanique des biellettes.

Avantageusement, l'invention permet donc de concilier, avec une grande fiabilité, les différents critères de conception des biellettes de direction, en séparant plus nettement les différents modes de fonctionnement desdites biellettes, en résistance ou en fusibilité, modes de fonctionnement qui peuvent ainsi être optimisés sans interférer l'un avec l'autre.

En outre, l'invention rend envisageable un allègement des biellettes, et par conséquent une économie significative de matériau et de masse embarquée.

Plus globalement, la mise à contribution de la partie électronique du module d'assistance pour protéger les organes mécaniques du dispositif de direction autorise une mise en oeuvre simple et peu coûteuse de l'invention, à même de réduire l'encombrement et le poids global dudit dispositif de direction.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique en perspective, un exemple de direction assistée pouvant être asservie par un procédé selon l'invention.

La figure 2 illustre, selon un schéma-bloc fonctionnel, un exemple de loi d'assistance permettant la mise en oeuvre d'un procédé conforme à l'invention.

La figure 3 illustre, selon un schéma-bloc fonctionnel, un exemple de stratégie de protection de biellettes de direction correspondant à la mise en oeuvre d'un procédé conforme à l'invention.

La figure 4 illustre, selon un chronogramme, un exemple de déroulement d'un procédé conforme à l'invention.

La présente invention concerne de manière générale les dispositifs de direction assistée 1, destinés à la conduite des véhicules, et plus particulièrement des véhicules automobiles, tels que les véhicules à roues destinés au transport de personnes et/ou de marchandises.

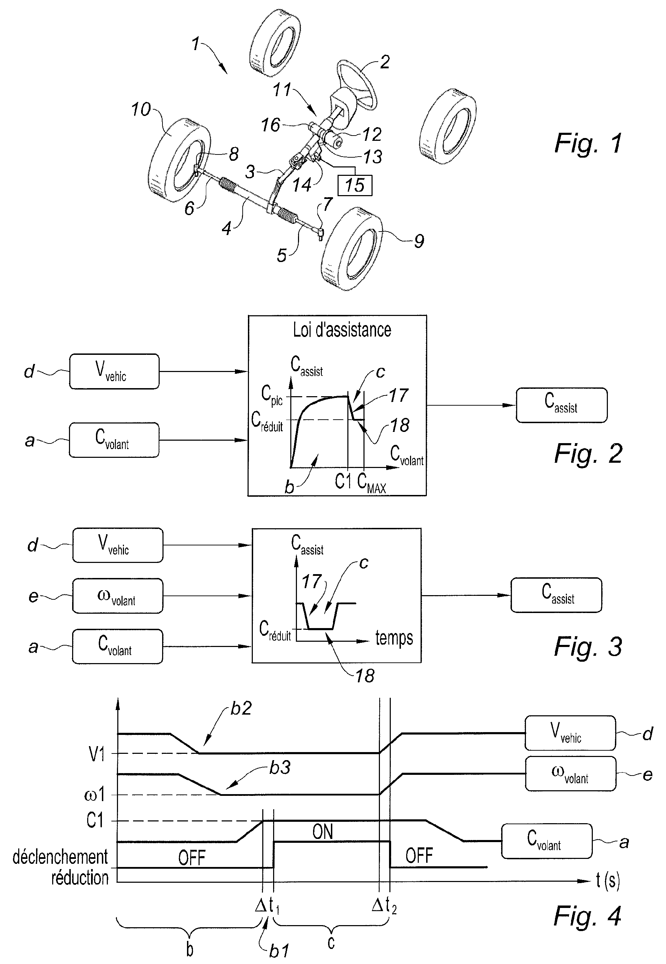

Tel que cela est illustré sur la figure 1, de tels dispositifs de direction 1 comprennent un volant de conduite 2 lié à une colonne de direction 3, dont l'extrémité éloignée du volant 2 porte un pignon de direction venant en prise avec une crémaillère (non visible) montée dans un carter de direction 4.

Les deux extrémités opposées de ladite crémaillère sont respectivement liées, par l'intermédiaire de biellettes de direction gauche 5 et droite 6, équipées chacune, à leur extrémité extérieure, d'une rotule de direction gauche 7 et droite 8, aux porte-moyeux (non représentés) des roues directrices gauche 9 et droite 10 du véhicule.

Avantageusement, la direction 1 comprend, pour assister l'effort manuel exercé par le conducteur du véhicule sur le volant 2, un module d'assistance de direction 11, qui comporte au moins un moteur d'assistance 12 conçu pour fournir un couple d'assistance $C_{assist}$ destiné à venir s'ajouter au couple volant $C_{volant}$ qui est exercé par le conducteur sur le volant de conduite 2 de la direction.

Le moteur d'assistance 12 pourra être par exemple hydraulique, ou de préférence électrique, avantageusement à double sens de rotation.

L'arbre de sortie dudit moteur d'assistance 12 sera accouplé, de préférence par l'intermédiaire d'un réducteur 13, par exemple du genre à vis sans fin et roue tangente, à la colonne de direction 3, de manière à pouvoir transmettre un couple d'assistance $C_{assist}$, moteur ou éventuellement résistant, à ladite colonne de direction 3.

Le moteur d'assistance 12 est piloté par un calculateur électronique embarqué 14, de préférence relié à un réseau CAN 15 (Controller Area Network) du véhicule lui permettant de recevoir et de traiter divers signaux en provenance de divers capteurs contrôlant divers paramètres de comportement du véhicule et de ses organes.

A partir de ces informations, le calculateur 14 pilote le moteur d'assistance 12, en imposant à tout moment des consignes appropriées, telles qu'une intensité d'alimentation correspondant au couple d'assistance $C_{assist}$ souhaité, et ce afin d'amplifier ou au contraire de compenser l'effort appliqué par le conducteur sur le volant 2, selon des lois d'assistance prédéfinies et programmées dans une mémoire non volatile dudit calculateur 14.

A ce titre, le procédé d'asservissement pour module d'assistance de direction conforme à l'invention comprend notamment une étape (a) d'évaluation du couple volant au cours de laquelle on recueille un signal indicateur représentatif de l'intensité du couple volant $C_{volant}$ exercé par le conducteur sur le volant de conduite 2.

A cet effet, le calculateur 1 pourra par exemple recevoir un signal indicateur provenant d'un capteur de couple 16 placé sur la colonne de direction 3 et mesurant ainsi le couple $C_{volant}$ exercé par le conducteur sur le volant 2. On pourra notamment employer à cet effet une jauge de contrainte associée à une barre de torsion interposée entre un tronçon de la colonne de direction 3 lié au volant et un autre tronçon de la colonne de direction lié au pignon.

Bien entendu, tout type de signal indicateur représentatif du couple volant $C_{volant}$ pourra être utilisé, qu'il provienne d'une mesure directe du couple par un capteur 16 idoine, ou bien d'une évaluation indirecte à partir d'autres paramètres, notamment liés au moteur d'assistance 12.

Selon l'invention, le procédé d'asservissement comprend une étape (b) de surveillance au cours de laquelle on compare le signal indicateur, représentatif de l'intensité du couple volant $C_{volant}$, à un seuil d'alerte C1 prédéterminé, puis, si ledit signal indicateur devient supérieur ou égal audit seuil d'alerte C1, une étape (c) de réduction d'assistance au cours de laquelle on réduit l'intensité du couple d'assistance $C_{assist}$ fourni par le moteur d'assistance 12, de telle sorte que la somme du couple volant $C_{volant}$ et du couple d'assistance $C_{assist}$ reste inférieure ou égale à un couple de manoeuvre critique $C_{critique}$ prédéterminé.

Par « *intensité du couple* », on désigne la valeur absolue du couple concerné, mesurant la grandeur de celui-ci. Ainsi, au sens de l'invention, une réduction de couple, et en particulier une réduction d'assistance, sera assimilée à une diminution de la valeur absolue dudit couple, l'ampleur dudit couple étant abaissée dans le sens la rapprochant du zéro.

A ce titre, il est remarquable que l'invention permet avantageusement d'adapter, et plus particulièrement de réduire, un couple d'assistance $C_{assist}$ qui est de même signe (algébrique) que le couple volant $C_{volant}$, et qui conserve, pendant la réduction d'assistance, le même signe que le couple volant $C_{volant}$, ainsi que, de préférence, une intensité non nulle.

En d'autres termes, la réduction d'assistance intervient avantageusement dans une situation dans laquelle l'assistance fonctionne en mode de renforcement (et non de compensation) du couple volant $C_{volant}$, c'est-à-dire dans laquelle le couple d'assistance $C_{assist}$ et le couple volant $C_{volant}$ agissent dans le même sens (de braquage) sur la colonne de direction 3, de manière cumulative, en additionnant leurs intensités respectives.

Ainsi, l'invention permet, tout en conservant de préférence une amplification du couple volant $C_{volant}$ par le couple d'assistance $C_{assist}$, aussi bien avant que pendant l'étape (c) de réduction d'assistance, de réduire l'ampleur de ladite amplification lors du déclenchement de ladite étape (c) de réduction.

De préférence, le couple de manoeuvre critique $C_{critique}$ est défini en fonction de la résistance mécanique de l'organe mécaniquement le plus faible de la direction 1, par exemple de l'une des biellettes de direction 5, 6 (à laquelle il sera fait préférentiellement référence, par commodité, dans ce qui suit).

Plus particulièrement, le couple de manoeuvre critique $C_{critique}$ pourra être choisi de telle sorte qu'il correspond au quotient du couple maximal admissible $C_{max\_admissible}$ par la direction 1, c'est-à-dire du couple seuil au-delà duquel on provoquerait le flambage plastique de l'organe mécaniquement le plus faible de ladite direction 1 (parmi notamment la crémaillère, le carter 4, et les biellettes 5, 6), divisé par un facteur de sécurité $\underline{k}$ compris entre 1,15 et 1,35.

En d'autres termes, on choisira de préférence :

$$C_{critique} = 1/k * C_{max\_admissible}, \text{ avec } 1,15 \leq k \leq 1,35.$$

Le couple maximal admissible $C_{max\_admissible}$, dont dépendront la configuration et le dimensionnement du dispositif de direction 1 (et réciproquement), pourra par exemple être spécifié par le cahier des charges du constructeur, en fonction notamment des caractéristiques du véhicule à équiper et de l'usage prévisible dudit véhicule.

Ainsi, le couple maximal admissible $C_{max\_admissible}$ pourra par exemple correspondre sensiblement à la limite élastique $R_{ec}$ des biellettes 5, 6 en compression, ou à la limite de déformation plastique à 0,2 % desdites biellettes $Rp_{0,2}$, c'est-à-dire $C_{max\_admissible} = R_{ec}$(biellettes) ou $C_{max\_admissible} = R_{P0,2}$(biellettes).

A titre d'exemple concret, le couple de manoeuvre critique $C_{critique}$, qui devra bien entendu être supérieur au maximum prévisible du couple volant $C_{volant}$, pourra être choisi entre 70 N.m et 85 N.m, et par exemple être de l'ordre de 80 N.m.

Le couple volant $C_{volant}$ maximal prévisible pourra quant à lui également être spécifié par le constructeur, en fonction notamment de la configuration du volant de conduite 2 et de la force musculaire maximale dont on peut prévoir qu'elle pourra être développée par le conducteur.

A titre indicatif, le couple volant $C_{volant}$ maximal prévisible pourra être choisi entre 30 N.m et 50 N.m, et par exemple voisin de 45 N.m.

A partir de ces éléments, on peut déterminer la plage d'évolution admissible du couple d'assistance $C_{assist}$, de telle sorte que l'on maintienne en permanence le niveau de sollicitation des organes mécaniques de la chaîne cinématique de direction dans un domaine de fonctionnement non dommageable auxdits organes mécaniques, et plus globalement non dommageable au dispositif de direction 1 : $C_{volant} + C_{assist} \leq C_{critique}$.

Avantageusement, le procédé objet de l'invention s'appliquera notamment, voire exclusivement, alors que les organes mécaniques mobiles de la direction ne se trouvent pas en position de fin de course contre une butée interne au dispositif de direction 1, et plus particulièrement alors que la crémaillère ne se trouve pas en butée de fin de course dans le carter de direction 4.

En d'autres termes, le procédé pourra avantageusement s'appliquer à une phase de braquage "libre", au cours de laquelle la direction 1 dispose (encore) d'une réserve de débattement dans le sens du braquage, et au cours de laquelle la résistance, voire l'opposition, au braquage, qui est ressentie à l'encontre de la manoeuvre du volant 2, et qui tend à inciter le conducteur à accentuer le couple volant, provient effectivement voire exclusivement de la mise en appui des roues directrices 9, 10 contre un obstacle externe au dispositif de direction 1 et au véhicule, et non d'un blocage du mécanisme de direction contre une butée interne.

Typiquement, le procédé, et plus particulièrement l'étape (c) de réduction d'assistance, pourra intervenir dans une situation où le véhicule est entravé latéralement par un obstacle, par exemple parce qu'il est stationné contre un trottoir ou enlisé dans une ornière, situation dans laquelle le conducteur cherche à utiliser la ou les roues directrices 9, 10 concernées comme levier(s) pour repousser le véhicule à distance de l'obstacle, en forçant la rotation azimutale de la ou des roue(s) dont le bord appuie contre ledit obstacle.

Avantageusement, l'intervention de l'asservissement électronique du module d'assistance 11 permettra donc d'ajuster et de doser en temps réel le couple d'assistance $C_{assist}$, afin d'une part de conserver une amplification fonctionnelle du couple volant $C_{volant}$, et ainsi faciliter la manoeuvre (typiquement de dégagement) recherchée par le conducteur, tout en bornant d'autre part la contribution du couple d'assistance $C_{assist}$ au couple de manoeuvre global, afin de préserver l'intégrité mécanique des organes de la direction sollicités par ledit couple de manoeuvre global.

En permettant de distinguer les différentes situations de vie du véhicule, et en affectant à ces dernières des modes fonctionnement dissociés, la gestion mixte, à la fois mécanique et électronique, du dispositif de direction 1 permet d'assurer avec une grande fiabilité aussi bien la fusibilité des biellettes en cas d'accident que la résistance mécanique desdites biellettes lors des manoeuvres, et notamment des manoeuvres de dégagement, sans qu'il soit nécessaire de sur-dimensionner lesdites biellettes.

Un allègement significatif desdites biellettes 5, 6, et plus globalement du dispositif de direction 1, est donc rendu possible par l'invention.

Le seuil d'alerte C1 pourra quant à lui correspondre par exemple à une fraction choisie du couple volant $C_{volant}$ maximal prévisible, ou à une fraction du couple de manoeuvre critique $C_{critique}$, ou bien encore, tel que cela est illustré sur la figure 2, à une fraction du calibre $C_{max}$ du capteur de couple 16, c'est-à-dire à une fraction du plafond de détection qui correspond à la valeur de saturation haute dudit capteur de couple.

A titre indicatif, ledit calibre (valeur de saturation haute) $C_{max}$ pourra par exemple être de l'ordre de 10 N.m.

En pratique, le seuil d'alerte C1 correspondra quant à lui de préférence à une intensité de couple volant $C_{volant}$ choisie entre 6 N.m et 10 N.m, et de préférence entre 6 N.m et 7 N.m.

Par ailleurs, le procédé selon l'invention comprend de préférence une étape (d) d'évaluation de la vitesse du véhicule, au cours de laquelle on évalue la vitesse de progression du véhicule $V_{vehic}$.

Au cours de l'étape (b) de surveillance, on peut alors appliquer un critère (b2) de non-dépassement de vitesse, selon lequel on pose comme condition de déclenchement de l'étape (c) de réduction d'assistance le fait que la vitesse de progression du véhicule $V_{vehic}$ soit inférieure ou égale (en valeur absolue) à un seuil de vitesse prédéterminé V1, de préférence sensiblement nul (soit $V_{véhic} \leq V1 = 0$ m/s).

La vitesse de progression $V_{vehic}$ correspond ici à la valeur absolue de la vitesse de déplacement longitudinal du véhicule, dans le sens de la marche avant ou, éventuellement de la marche arrière.

Avantageusement, en posant une condition supplémentaire au déclenchement de l'étape (c) de réduction de l'assistance, et plus particulièrement une condition selon laquelle la vitesse du véhicule $V_{vehic}$ doit être sensiblement nulle, on peut identifier les situations dans lesquelles le véhicule est à l'arrêt, et ainsi limiter la mise en oeuvre de ladite étape (c) de réduction à de telles situations.

En pratique, on pourra ainsi réserver l'utilisation du procédé à une "assistance parking", l'arrêt du véhicule étant détecté par le non-dépassement du seuil de vitesse V1.

De préférence, le procédé peut par ailleurs comprendre une étape (e) d'évaluation de la vitesse de rotation du volant de conduite, au cours de laquelle on évalue la vitesse de rotation $\omega_{volant}$ du volant de conduite 2 que le conducteur confère audit volant 2 en le manoeuvrant.

Au cours de l'étape (b) de surveillance, on peut alors appliquer un critère (b3) de non-dépassement de vitesse de rotation de volant, selon lequel on pose comme condition de déclenchement de l'étape (c) de réduction d'assistance le fait que la vitesse de rotation du volant de conduite $\omega_{volant}$ soit inférieure ou égale à un seuil de vitesse de rotation $\omega_1$ prédéterminé, de préférence de l'ordre de 1 tr/min (« 1 rpm ») à 2 tr/min (« 2 rpm »), voire sensiblement nul.

Le cas échéant, on peut également utiliser à cet effet, de manière équivalente, une mesure de la vitesse de rotation du moteur d'assistance 12, qui est en principe représentative de la vitesse de rotation du volant de conduite 2, au rapport de réduction du réducteur 13 près. En pareil cas, on pourra par exemple poser comme critère de non-dépassement de vitesse de rotation le fait que la vitesse de rotation de l'arbre du moteur d'assistance 12 est inférieure ou égale à 16 tr/min.

Avantageusement, une telle condition de non-dépassement de vitesse de rotation, de préférence cumulative à l'une et/ou l'autre des conditions précédentes, permet notamment de détecter une situation de braquage lent, voire de blocage de la rotation azimutale des roues 9, 10, situation qui correspond à une manoeuvre de dégagement en force au cours de laquelle on cherche à utiliser un ou les roues directrice(s) 9, 10 comme levier(s).

Selon une possibilité préférentielle de mise en oeuvre du procédé, les étapes (b) de surveillance et (c) de réduction d'assistance suivent, tel que cela est illustré sur la figure 2, une loi d'assistance qui définit le couple d'assistance $C_{assist}$ (ou, plus particulièrement, l'intensité de consigne appliquée au moteur d'assistance 12 pour obtenir ledit couple d'assistance $C_{assist}$) comme une fonction croissante, de préférence concave, du couple volant $C_{volant}$ (ou, plus particulièrement, du signal indicateur correspondant) jusqu'au seuil d'alerte C1, puis comme une fonction décroissante dudit couple volant $C_{volant}$ au-delà dudit seuil d'alerte C1.

La partie croissante de la loi d'assistance pourra être strictement monotone, mais toutefois s'infléchir, de telle sorte que la pente ascendante est plus marquée au départ qu'à l'approche du seuil d'alerte C1, vers lequel la courbe peut tendre éventuellement de manière sensiblement asymptotique.

La partie décroissante pourra faire redescendre le couple d'assistance $C_{assist}$ depuis un maximum $C_{pic}$, correspondant à la valeur prise par ledit couple d'assistance $C_{assist}$ au moment ou le couple volant $C_{volant}$ atteint le seuil d'alerte C1, jusqu'à un palier 18 de valeur $C_{réduit}$ strictement inférieure à $C_{pic}$, mais de préférence non nulle.

Le couple d'assistance $C_{assist}$ pourra de préférence être maintenu à ce palier réduit $C_{réduit}$ tant que les conditions d'application de l'étape (c) de réduction sont remplies, et en particulier tant que le couple volant $C_{volant}$ dépasse le seuil d'alerte C1.

Par ailleurs, le déclenchement de l'étape (c) de réduction d'assistance pourra être opéré selon différents critères temporels, par exemple lorsque le signal indicateur atteint ou dépasse ledit seuil d'alerte, ou si le signal indicateur se maintient au-dessus dudit seuil d'alerte pendant une durée supérieure à une durée de temporisation prédéterminée.

Ainsi, selon le procédé conforme à l'invention, et notamment en combinaison avec l'une et/ou l'autre des conditions de déclenchement susmentionnées, on pourra appliquer, au cours de l'étape (b) de surveillance, tel que cela est notamment illustré sur la figure 4, un critère (b1) de temporisation selon lequel on pose comme condition au déclenchement de l'étape (c) de réduction d'assistance le maintien du signal indicateur représentatif de l'intensité du couple volant $C_{volant}$ à un niveau supérieur ou égal au seuil d'alerte C1 pendant une durée de temporisation $\Delta t_1$ prédéterminée, de préférence de l'ordre de 1 s à 2 s.

En d'autres termes, plusieurs options de basculement peuvent être envisagées pour conditionner le basculement de l'asservissement conforme à l'invention de son mode de fonctionnement amplifié "normal", au cours duquel l'assistance $C_{assist}$ croît avec le couple volant $C_{volant}$, à son mode de fonctionnement borné, au cours duquel on réduit le couple d'assistance $C_{assist}$, et/ou inversement, pour conditionner le retour du mode de fonctionnement borné au mode de fonctionnement normal.

Selon une première option, le basculement pourra être immédiat et direct, et survenir sitôt que la condition de franchissement du seuil d'alerte C1 est réalisée, où, le cas échéant, sitôt qu'il est satisfait simultanément, à un instant donné, aux différentes conditions cumulatives de déclenchement, telles que, en sus de la condition relative au franchissement du seuil d'alerte C1, celle portant sur la vitesse du véhicule $V_{vehic}$ et/ou celle portant sur la vitesse de rotation du volant $\omega_{volant}$.

De manière analogue, la réduction d'assistance pourra perdurer tant que le signal indicateur égale ou se maintient au-dessus du seuil d'alerte C1, ou plus globalement tant que toutes les conditions cumulatives de déclenchement restent remplies, le retour au mode de fonctionnement normal se faisant sitôt que la condition (ou, le cas échéant, au moins l'une des conditions cumulatives) n'est plus satisfaite, c'est-à-dire en particulier dès que le signal indicateur redescend sous le seuil d'alerte C1.

Selon une seconde option, le basculement peut intervenir de manière différée, par le biais d'une temporisation, de sorte que le passage du mode normal au mode borné se produira après que la ou les conditions de déclenchement, et notamment le dépassement du seuil d'alerte C1 par le signal indicateur, aura(auront) été (le cas échéant toutes) maintenue(s) pendant au moins la durée de temporisation $\Delta t_1$.

A l'inverse, le retour à la normale pourra s'effectuer, tel que cela est notamment illustré sur la figure 4, lorsqu'une durée de temporisation $\Delta t_2$ (égale ou différente de celle utilisée pour le passage en mode borné) se sera écoulée après que l'une quelconque des conditions de maintien du mode borné aura été levée, par exemple si le véhicule reprend de la vitesse, que la vitesse de rotation du volant $\omega_{volant}$ excède de nouveau le seuil prédéterminé $\omega_1$, et/ou que le couple

volant $C_{volant}$ redescend sous le seuil critique C1.

Selon le procédé conforme à l'invention, qui sera particulièrement adapté à la gestion par temporisation, le signal indicateur utilisé pour la comparaison au seuil d'alerte (C1) et pour la temporisation lors de l'étape (b) de surveillance correspond à l'intensité du courant électrique appliqué au moteur d'assistance 12.

En effet, il est possible de prévoir une loi d'assistance qui associe, en fonctionnement normal, et de manière déterministe, un couple d'assistance $C_{assist}$ (ou, de manière équivalente, une intensité de consigne applicable au moteur d'assistance) à toute valeur de couple volant $C_{volant}$ non nulle.

En particulier, ladite loi pourra assurer un accroissement du couple d'assistance dès la perception d'un couple volant non nul, et atteindre "rapidement" un maximum, en plafonnant à une valeur maximale prédéterminée avant même que ledit couple volant $C_{volant}$ n'atteigne la limite supérieure de détection $C_{max}$ du capteur de couple 16, et par exemple sitôt que le couple volant $C_{volant}$ atteint son seuil d'alerte C1.

En pareil cas, si l'on constate, lors de l'étape (b) de surveillance, que l'intensité du courant électrique appliqué au moteur d'assistance 12 atteint et se maintient au niveau maximal prévu par la loi d'assistance pendant la durée de temporisation $\Delta t_1$, cela signifie nécessairement que le couple volant $C_{volant}$, l'antécédent de ladite intensité du courant électrique dans la fonction définissant la loi d'assistance, a franchi le seuil d'alerte C1 et se maintient, voire progresse, au-dessus dudit seuil d'alerte C1, pendant cette même période.

En particulier, lors d'une manoeuvre de braquage au cours de laquelle l'une des roues 9, 10 rencontre la résistance d'un obstacle, le maximum d'assistance peut ainsi être atteint chronologiquement "en avance de phase", alors que l'effort exercé par le conducteur sur le volant croît encore, et par conséquent avant que le maximum effectif de couple volant soit atteint.

Une détection du plafonnement anticipé du couple d'assistance (et plus particulièrement de l'intensité du courant alimentant le moteur d'assistance), et un déclenchement temporisé de l'étape (c) de réduction d'assistance, calculé à partir de l'instant de ce plafonnement, permet donc de faire sensiblement coïncider la diminution de l'assistance $C_{assist}$ avec l'arrivée, déphasée, du maximum effectif de couple volant $C_{volant}$.

Ainsi, on parvient en quelque sorte à neutraliser le dépassement du seuil d'alerte C1 par le couple volant $C_{volant}$ au moyen d'une réduction concomitante du couple d'assistance $C_{assist}$.

Tel que cela a été indiqué ci-dessus, on peut en effet avantageusement prévoir une loi d'assistance qui associe à toute valeur de couple volant $C_{volant}$ non nulle une intensité de consigne applicable au moteur d'assistance, ladite loi plafonnant à une valeur maximale prédéterminée sitôt que le couple volant $C_{volant}$ atteint son seuil d'alerte C1, et déclencher l'étape (c) de réduction d'assistance si l'on constate, lors de l'étape (b) de surveillance, que l'intensité du courant électrique appliqué au moteur d'assistance 12 atteint et se maintient au niveau maximal prévu par ladite loi d'assistance pendant la durée de temporisation $\Delta t_1$.

De préférence, lors de l'étape (c) de réduction d'assistance, et quelles que soient par ailleurs les conditions de déclenchement de ladite étape (c) de réduction d'assistance, on diminue la consigne d'alimentation du moteur d'assistance, et plus globalement le couple d'assistance $C_{assist}$, d'au moins 10 %, de préférence d'au moins 20%, d'au moins 30 %, d'au moins 40 %, voire d'au moins 50 %, par rapport à la valeur de consigne (plus globalement, de couple) d'assistance $C_{pic}$ qui était atteinte au moment où le signal indicateur a franchi le seuil d'alerte C1.

Bien entendu, l'ampleur (ou les proportions) de la réduction d'assistance sera choisie en fonction de l'intensité maximale prévisible du couple volant $C_{volant}$, de sorte à être suffisante pour infléchir la progression du couple total de manoeuvre, et plus particulièrement de sorte à au moins borner ledit couple total de manoeuvre, afin de le maintenir en-deçà de sa valeur critique $C_{critique}$, en compensant au moins en partie, voire en totalité l'augmentation prévisible du couple volant $C_{volant}$ au-delà du seuil d'alerte C1.

De préférence, lors de l'étape (c) de réduction d'assistance, on réduit progressivement la consigne d'alimentation du moteur d'assistance 12, selon une fonction monotone décroissante du temps et/ou du signal indicateur représentatif du couple volant $C_{volant}$.

Avantageusement, le caractère progressif de la réduction, et plus globalement des transitions entre mode de fonctionnement normal et mode de fonctionnement borné, permet non seulement de ménager les organes mécaniques et électriques du dispositif de direction, en évitant les variations brusques de consignes, mais également d'offrir une bonne sécurité et une bonne ergonomie à la manoeuvre, en procurant au conducteur un ressenti fidèle et intuitif des réactions dudit dispositif de direction 1.

De préférence la réduction d'assistance s'effectuera à cet effet selon une rampe décroissante 17.

Par ailleurs, le profil de réduction d'assistance, quel qu'il soit, et plus particulièrement ladite rampe décroissante 17, pourra de préférence conduire à un palier 18.

Ledit palier 18 correspondra avantageusement à un plancher, de préférence non nul, au niveau duquel la valeur d'assistance réduite $C_{réduit}$ est maintenue tant que l'étape (c) de réduction trouve à s'appliquer.

Comme indiqué précédemment, ledit palier 18 pourra être situé par exemple au moins 10 %, au moins 20 %, au moins 30 %, au moins 40 %, voire au moins 50 % sous le point de départ $C_{pic}$ du profil de réduction, et plus particulièrement de la rampe 17, point de départ $C_{pic}$ qui correspond ici au maximum de couple d'assistance $C_{assist}$

atteint au moment de déclencher l'étape (c) de réduction.

A titre particulièrement préférentiel, $C_{réduit}$ sera sensiblement compris entre 40 % et 60 % de $C_{pic}$, et de préférence voisin de 50 % de ce dernier, la réduction opérée sur le couple d'assistance $C_{assist}$ pour soulager la direction étant d'environ de moitié.

Un exemple de fonctionnement dynamique de procédé conforme à l'invention va être maintenant brièvement décrit en référence à la figure 4.

Initialement, l'asservissement de la direction 1 se trouve en mode de fonctionnement normal, selon une ou des lois usuelles d'amplification ou de rappel des mouvements du volant de conduite 2. L'ordre de déclenchement de l'étape (c) de réduction d'assistance est donc inhibé, sur « OFF ».

Cependant, le calculateur 14 exécute (et répète), sensiblement en temps réel, et de préférence par échantillonnage, l'étape (b) de surveillance des différents paramètres impliqués dans la prise de décision de déclenchement de l'étape (c) de réduction.

Supposons que la vitesse du véhicule $V_{véhic}$ en mouvement soit initialement supérieure au seuil de vitesse V1. Lorsque le véhicule gagne son stationnement, ladite vitesse décroît, puis s'annule, en passant sous ledit seuil V1. La première condition de d'application de la loi de réduction relative au critère (b2) de non-dépassement de vitesse est alors remplie.

Au moment de quitter le stationnement, le blocage de l'une et/ou l'autre des roues directrices 9, 10 contre un obstacle, par exemple contre la bordure d'un trottoir, lors du braquage, freine voire bloque la rotation du volant de conduite 2, dont la vitesse de rotation $\omega_{volant}$ descend sous le seuil $\omega_1$. La seconde condition d'application de la loi de réduction relative au critère (b3) de non-dépassement de la vitesse de rotation est alors remplie.

Le conducteur accentuant son effort sur le volant de conduite 2, à l'encontre de la résistance opposée par l'obstacle, le couple volant $C_{volant}$ (et par conséquent, le signal indicateur correspondant) augmente pour atteindre voire dépasser le seuil d'alerte C1.

On remarquera que cette situation de franchissement du seuil d'alerte peut être notamment signalée, le cas échéant, soit par une mesure (de préférence directe) du couple volant et par comparaison de cette mesure au seuil d'alerte C1, soit, de manière sensiblement équivalente, par le fait que l'intensité du courant appliqué au moteur d'assistance 12 atteint son plafond.

Une troisième, et principale, condition de déclenchement de l'étape (c) de réduction est alors remplie.

Lorsque ces conditions cumulatives restent réunies, ici pendant un laps de temps supérieur à la durée de temporisation $\Delta t_1$, et plus particulièrement lorsque l'intensité du courant appliqué au moteur d'assistance 12 est maintenue à son plafond pendant au moins ladite durée de temporisation $\Delta t_1$, le conducteur poursuivant son effort sur le volant 2 pour se dégager de l'obstacle, le procédé enclenche l'étape (c) de réduction d'assistance (signal « ON » sur la figure 4), de sorte à basculer en mode de fonctionnement borné.

Tel que cela est illustré sur la figure 3, le couple d'assistance $C_{assist}$ artificiellement généré par le moteur 12 est alors diminué, jusqu'à son palier 18, auquel il est maintenu tant que dure l'ordre de réduction (« ON »).

La sollicitation de manoeuvre globale, à laquelle est soumise, la direction 1, se trouve donc limitée électroniquement pour éviter tout dommage à ladite direction.

Lorsque le véhicule est dégagé et quitte son stationnement, comme en témoigne l'augmentation de sa vitesse $V_{véhic}$ et/ou de la vitesse de rotation $\omega_{volant}$ du volant de conduite 2, ce dernier ayant retrouvé son amplitude de libre débattement, le risque de forcer statiquement la direction 1 au point de déformer les biellettes 5, 6 est en principe écarté.

Il peut donc être mis fin, le cas échéant après une temporisation de retour $\Delta t_2$, à l'étape (c) de réduction d'assistance, afin de revenir au mode d'asservissement normal (retour sur « OFF »).

Bien entendu, l'invention n'est nullement limitée à l'une ou l'autre des variantes susmentionnées, l'homme du métier étant naturellement à même d'isoler ou de combiner librement entre elles l'une et/ou l'autre des caractéristiques décrites dans ce qui précède.

En particulier, il est envisageable de conditionner le déclenchement de l'étape (c) de réduction d'assistance uniquement par le franchissement du seuil d'alerte C1 par le couple volant (ou par tout paramètre équivalent), ou bien au contraire par une ou plusieurs autres conditions liées par exemple à la vitesse du véhicule ou à la vitesse de rotation du volant.

L'invention concerne par ailleurs en tant que tel un module d'assistance de direction 11 comprenant un calculateur 14 programmé pour mettre en oeuvre le procédé d'asservissement selon l'une quelconque des variantes de l'invention.

Ledit calculateur 14 pourra prendre toute forme appropriée, telle que microprocesseur, carte électronique, ordinateur, automate programmable, voire module informatique virtuel intégré dans un ordinateur de bord.

L'invention se rapporte également à un véhicule automobile équipé d'un module d'assistance de direction 11 selon l'invention.

L'invention concerne enfin également un quelconque support de données lisible par un ordinateur (en particulier par le calculateur 14) et comprenant des éléments de code d'un programme informatique conçu pour mettre en oeuvre un procédé d'asservissement de module de direction selon l'invention lorsque ledit programme est exécuté par un ordinateur.

**Revendications**

1. Procédé d'asservissement pour module d'assistance de direction, ledit module d'assistance (11) comportant au moins un moteur d'assistance (12) conçu pour fournir un couple d'assistance ($C_{assist}$) destiné à venir s'ajouter à un couple volant ($C_{volant}$) qui est exercé par le conducteur sur le volant de conduite (2) de la direction (1), ledit procédé comprenant une étape (a) d'évaluation du couple volant au cours de laquelle on recueille un signal indicateur représentatif de l'intensité du couple volant ($C_{volant}$) exercé par le conducteur sur le volant de conduite, ledit procédé comprenant une étape (b) de surveillance au cours de laquelle on compare le signal indicateur, représentatif de l'intensité du couple volant ($C_{volant}$), à un seuil d'alerte (C1) prédéterminé, puis, si ledit signal indicateur devient supérieur ou égal audit seuil d'alerte (C1), une étape (c) de réduction d'assistance au cours de laquelle on réduit l'intensité du couple d'assistance ($C_{assist}$) fourni par le moteur d'assistance (12), de telle sorte que la somme du couple volant ($C_{volant}$) et du couple d'assistance ($C_{assist}$) reste inférieure ou égale à un couple de manoeuvre critique ($C_{critique}$) prédéterminé, ledit procédé étant tel que, au cours de l'étape (b) de surveillance, on applique un critère (b1) de temporisation selon lequel on pose comme condition au déclenchement de l'étape (c) de réduction d'assistance le maintien du signal indicateur à un niveau supérieur ou égal au seuil d'alerte (C1) pendant une durée de temporisation ($\Delta t_1$) prédéterminée, ledit procédé étant **caractérisé en ce que** le signal indicateur utilisé pour la comparaison au seuil d'alerte (C1) et pour la temporisation lors de l'étape (b) de surveillance correspond à l'intensité du courant électrique appliqué au moteur d'assistance (12).

2. Procédé selon la revendication 1 **caractérisé en ce que** l'on prévoit une loi d'assistance qui associe à toute valeur de couple volant ($C_{volant}$) non nulle une intensité de consigne applicable au moteur d'assistance, ladite loi plafonnant à une valeur maximale prédéterminée sitôt que le couple volant ($C_{volant}$) atteint son seuil d'alerte (C1), et **en ce que** l'on déclenche l'étape (c) de réduction d'assistance si l'on constate, lors de l'étape (b) de surveillance, que l'intensité du courant électrique appliqué au moteur d'assistance (12) atteint et se maintient au niveau maximal prévu par ladite loi d'assistance pendant la durée de temporisation ($\Delta t_1$).

3. Procédé selon la revendication 1 ou 2 **caractérisé en ce que** le seuil d'alerte (C1) correspond à une intensité de couple volant ($C_{volant}$) choisie entre 6 N.m et 10 N.m, et de préférence entre 6 N.m et 7 N.m.

4. Procédé selon l'une des revendications 1 à 3 **caractérisé en ce que** les étapes (b) de surveillance et (c) de réduction d'assistance suivent une loi d'assistance qui définit le couple d'assistance ($C_{assist}$) comme une fonction croissante, de préférence concave, du couple volant ($C_{volant}$) jusqu'au seuil d'alerte (C1), puis comme une fonction décroissante dudit couple volant ($C_{volant}$) au-delà dudit seuil d'alerte (C1).

5. Procédé selon l'une des revendications précédentes **caractérisé en ce que** la durée de temporisation ($\Delta t_1$) prédéterminée est de l'ordre de 1 s à 2 s.

6. Procédé selon l'une des revendications précédentes **caractérisé en ce qu'**il comprend une étape (d) d'évaluation de la vitesse du véhicule, au cours de laquelle on évalue la vitesse de progression du véhicule ($V_{vehic}$), et **en ce que**, au cours de l'étape (b) de surveillance, on applique un critère (b2) de non-dépassement de vitesse, selon lequel on pose comme condition de déclenchement de l'étape (c) de réduction d'assistance le fait que la vitesse de progression du véhicule ($V_{vehic}$) soit inférieure ou égale à un seuil de vitesse (V1) prédéterminé, de préférence sensiblement nul.

7. Procédé selon l'une des revendications précédentes **caractérisé en ce qu'**il comprend une étape (e) d'évaluation de la vitesse de rotation du volant de conduite, au cours de laquelle on évalue la vitesse de rotation ($\omega_{volant}$) du volant de conduite (2) que le conducteur confère audit volant (2) en le manoeuvrant, et **en ce que**, au cours de l'étape (b) de surveillance, on applique un critère (b3) de non-dépassement de vitesse de rotation de volant, selon lequel on pose comme condition de déclenchement de l'étape (c) de réduction d'assistance le fait que la vitesse de rotation du volant de conduite ($\omega_{volant}$) soit inférieure ou égale à un seuil de vitesse de rotation ($\omega_1$) prédéterminé, de préférence de l'ordre de 1 tr/min à 2 tr/min, voire sensiblement nul.

8. Procédé selon l'une des revendications précédentes **caractérisé en ce que**, lors de l'étape (c) de réduction d'assistance, on diminue la consigne d'alimentation du moteur d'assistance d'au moins 10 %, de préférence d'au moins 20%, d'au moins 30 %, d'au moins 40 %, voire d'au moins 50 %, par rapport à la valeur de consigne d'assistance ($C_{pic}$) qui était atteinte au moment où le signal indicateur a franchi le seuil d'alerte (C1).

9. Procédé selon l'une des revendications précédentes **caractérisé en ce que**, lors de l'étape (c) de réduction d'assistance, on réduit progressivement la consigne d'alimentation du moteur d'assistance (12), selon une fonction monotone décroissante du temps et/ou du signal indicateur, de préférence selon une rampe décroissante (17) conduisant à un palier (18) qui peut être situé par exemple au moins 10 %, au moins 20 %, au moins 30 %, au moins 40 %, voire au moins 50 % sous le point de départ ($C_{pic}$) de ladite rampe (17).

10. Procédé selon l'une des revendications précédentes **caractérisé en ce que** le couple de manoeuvre critique ($C_{critique}$) est choisi de telle sorte qu'il correspond au quotient du couple maximal admissible par la direction ($C_{max\_admissible}$), au-delà duquel on provoquerait le flambage plastique de l'organe mécaniquement le plus faible de ladite direction (1), par exemple de l'une des biellettes de direction (5, 6), divisé par un facteur de sécurité (k) compris entre 1,15 et 1,35 : Critique = 1/k * $C_{max\_admissible}$, avec $1,15 \leq k \leq 1,35$.

11. Module d'assistance de direction (11) comprenant un calculateur (14) programmé pour mettre en oeuvre le procédé d'asservissement selon l'une quelconque des revendications précédentes.

12. Véhicule automobile **caractérisé en ce qu'**il est équipé d'un module d'assistance de direction (11) selon la revendication 11.

13. Support de données lisible par un ordinateur et comprenant des éléments de code d'un programme informatique conçu pour mettre en oeuvre un procédé d'asservissement de module de direction selon l'une quelconque des revendications 1 à 10 lorsque ledit programme est exécuté par un ordinateur.

**Patentansprüche**

1. Regelungsverfahren für ein Lenkunterstützungsmodul, wobei das besagte Unterstützungsmodul (11) zumindest einen Unterstützungsmotor (12) umfasst, der konzipiert ist, um ein Unterstützungsmoment ($C_{assist}$) bereitzustellen, das dazu bestimmt ist, um zu einem Lenkradmoment ($C_{volant}$) hinzugefügt zu werden, das vom Lenker auf das Lenkrad (2) der Lenkung (1) ausgeübt wird, wobei das besagte Verfahren einen Schritt (a) zur Bewertung des Lenkradmoments umfasst, im Laufe dessen man ein repräsentatives Hinweissignal für die Intensität des Lenkradmoments ($C_{volant}$) aufnimmt, das durch den Lenker auf das Lenkrad ausgeübt wird, wobei das besagte Verfahren einen Schritt (b) zum Überwachen umfasst, im Laufe dessen man das repräsentative Hinweissignal für die Intensität des Lenkradmoments ($C_{volant}$) mit einer vorbestimmten Warngrenze (C1) vergleicht, und danach, falls das besagte Hinweissignal größer oder gleich der besagten vorbestimmten Warngrenze (C1) ist, einen Schritt (c) zum Verringern der Unterstützung, im Laufe dessen man die Intensität des Unterstützungsmoments ($C_{assist}$), das vom Unterstützungsmotor (12) bereitgestellt wird, derart verringert, dass die Summe des Lenkradmoments ($C_{volant}$) und des Unterstützungsmoments ($C_{assist}$) kleiner oder gleich einem vorbestimmten kritischen Manövriermoment ($C_{critique}$) bleibt, wobei das besagte Verfahren dergestalt ist, dass man im Laufe des Schrittes (b) zum Überwachen ein Verzögerungskriterium (b1) anwendet, laut dem man als Bedingung für die Auslösung des Schrittes (c) zum Verringern der Unterstützung die Beibehaltung des Hinweissignals während einer vorbestimmten Verzögerungsdauer ($\Delta t$) auf einem Niveau größer oder gleich der Warngrenze (C1) einsetzt, wobei das besagte Verfahren **dadurch gekennzeichnet ist, dass** das Hinweissignal, das für den Vergleich mit der Warngrenze (C1) und für die Verzögerung beim Schritt (b) zum Überwachen verwendet wird, der Stromstärke des elektrischen Stroms entspricht, der auf den Unterstützungsmotor (12) angewandt wird.

2. Verfahren nach Anspruch 1, **dadurch gekennzeichnet, dass** man ein Unterstützungsgesetz vorsieht, das jedem Wert eines Lenkradmoments ($C_{volant}$) ungleich Null einen Stromstärkesollwert zuordnet, der auf den Unterstützungsmotor anwendbar ist, wobei das besagte Gesetz auf einem vorbestimmten maximalen Wert nach oben abgegrenzt wird, sobald das Lenkradmoment ($C_{volant}$) seine Warngrenze (C1) erreicht, und dadurch, dass man den Schritt (c) zum Verringern der Unterstützung auslöst, wenn man beim Schritt (b) zum Überwachen feststellt, dass die Stromstärke des elektrischen Stroms, der auf den Unterstützungsmotor (12) angewandt wird, das maximale Niveau erreicht, das durch das besagte Unterstützungsgesetz vorgesehen ist, und an diesem während der Verzögerungsdauer ($\Delta t_1$) festhält.

3. Verfahren nach Anspruch 1 oder 2, **dadurch gekennzeichnet, dass** die Warngrenze (C1) einer Intensität eines

Lenkradmoments ($C_{volant}$) entspricht, die zwischen 6 N.m und 10 N.m, und vorzugsweise zwischen 6 N.m und 7 N.m ausgewählt wird.

4. Verfahren nach einem der Ansprüche 1 bis 3, **dadurch gekennzeichnet, dass** die Schritte (b) zum Überwachen und (c) zum Verringern der Unterstützung einem Unterstützungsgesetz folgen, dass das Unterstützungsmoment ($C_{assist}$) als zunehmende, vorzugsweise konkave, Funktion des Lenkradmoments ($C_{volant}$) bis zur Warngrenze (C1) definiert, und danach als abnehmende Funktion des besagten Lenkradmoments ($C_{volant}$) über die besagte Warngrenze (C1) hinaus.

5. Verfahren nach einem der vorherigen Ansprüche, **dadurch gekennzeichnet, dass** die vorbestimmte Verzögerungsdauer ($\Delta t_1$) in der Größenordnung von 1 s bis 2 s liegt.

6. Verfahren nach einem der vorherigen Ansprüche, **dadurch gekennzeichnet, dass** es einen Schritt (d) zur Bewertung der Fahrzeuggeschwindigkeit umfasst, im Laufe dessen man die Fortbewegungsgeschwindigkeit des Fahrzeugs ($V_{véhic}$) bewertet, und dadurch, dass man im Laufe des Schrittes (b) zum Überwachen ein Kriterium (b2) zur Nicht-Überschreitung der Geschwindigkeit anwendet, wonach man als Bedingung für die Auslösung des Schrittes (c) zum Verringern der Unterstützung die Tatsache einsetzt, dass die Fortbewegungsgeschwindigkeit des Fahrzeugs ($V_{véhic}$) kleiner oder gleich einem vorbestimmten Geschwindigkeitsgrenzwert (V1), vorzugsweise in etwa Null ist.

7. Verfahren nach einem der vorherigen Ansprüche, **dadurch gekennzeichnet, dass** es einen Schritt (e) zur Bewertung der Rotationsgeschwindigkeit des Lenkrades umfasst, im Laufe dessen man die Rotationsgeschwindigkeit ($\omega_{volant}$) des Lenkrades (2) bewertet, die der Lenker durch dessen Manövrieren auf das besagte Lenkrad (2) ausübt, und dadurch, dass man im Laufe des Schrittes (b) zum Überwachen ein Kriterium (b3) der Nicht-Überschreitung der Rotationsgeschwindigkeit des Lenkrades anwendet, laut dem man als Bedingung für die Auslösung des Schrittes (c) zum Verringern der Unterstützung die Tatsache einsetzt, dass die Rotationsgeschwindigkeit ($\omega_{volant}$) des Lenkrades (2) kleiner oder gleich einem vorbestimmten Rotationsgeschwindigkeitsgrenzwert ($\omega_1$), vorzugsweise in der Größenordnung von 1 U./Min bis 2 U./Min, oder gar in etwa Null ist.

8. Verfahren nach einem der vorherigen Ansprüche, **dadurch gekennzeichnet, dass** man beim Schritt (c) zum Verringern der Unterstützung den Versorgungssollwert des Unterstützungsmotors um zumindest 10%, vorzugsweise um zumindest 20%, zumindest 30%, zumindest 40% oder gar um zumindest 50% im Verhältnis zum Unterstützungssollwert ($C_{pic}$) verringert, der zu dem Zeitpunkt erreicht wurde, an dem das Hinweissignal die Warngrenze (C1) erreicht hat.

9. Verfahren nach einem der vorherigen Ansprüche, **dadurch gekennzeichnet, dass** man beim Schritt (c) zum Verringern der Unterstützung progressiv den Versorgungssollwert des Unterstützungsmotors (12) entsprechend einer abnehmenden monotonen Funktion der Zeit und/ oder des Hinweissignals, vorzugsweise entsprechend einer fallenden Rampe (17) reduziert, die zu einem Zwischenstadium (18) führt, das sich beispielsweise um zumindest 10%, zumindest 20%, zumindest 30%, zumindest 40% oder gar um zumindest 50% unter dem Startpunkt ($C_{pic}$) der besagten Rampe (17) befinden kann.

10. Verfahren nach einem der vorherigen Ansprüche, **dadurch gekennzeichnet, dass** das kritische Manövriermoment ($C_{critique}$) derart ausgewählt wird, dass es dem Quotienten des maximal von der Lenkung ($C_{max\_admissible}$) zulässigen Moments entspricht, über dem man das plastische Knicken des mechanisch schwächsten Elements der besagten Lenkung (1), beispielsweise einer der Spurstangen (5, 6) hervorrufen würde, das durch einen Sicherheitsbeiwert (k) zwischen 1,15 und 1,35 geteilt wird: $C_{critique} = 1/k * C_{max\_admissible}$, mit $1{,}15 \leq k \leq 1{,}35$.

11. Lenkunterstützungsmodul (11), einen Rechner (14) umfassend, der programmiert ist, um das Regelungsverfahren nach irgendeinem der vorherigen Ansprüche anzuwenden.

12. Kraftfahrzeug, **dadurch gekennzeichnet, dass** es mit einem Lenkunterstützungsmodul (11) nach Anspruch 11 ausgestattet ist.

13. Datenbank, die von einem Computer gelesen werden kann, und Codeelemente eines Informatikprogramms umfassend, das gestaltet wurde, um ein Unterstützungsverfahren für das Lenkungsmodul nach irgendeinem der Ansprüche 1 bis 10 anzuwenden, wenn das besagte Programm von einem Computer ausgeführt wird.

**Claims**

1. A servo-control method for steering assist module, said assist module (11) including at least one assist motor (12) designed to provide an assist torque ($C_{assist}$) intended to be added to a steering wheel torque ($C_{volant}$) which is exerted by the driver on the steering wheel (2) of the steering (1), said method comprising an evaluation step (a) of the steering wheel torque during which an indicator signal representative of the intensity of the steering wheel torque ($C_{volant}$) exerted by the driver on the steering wheel is collected, said method comprising a monitoring step (b) during which the indicator signal representative of the intensity of the steering wheel torque ($C_{volant}$) is compared to a predetermined alert threshold (C1), then, if said indicator signal becomes greater than or equal to said alert threshold (C1), an assist reduction step (c) during which the intensity of the assist torque ($C_{assist}$) provided by the assist motor (12) is reduced, so that the sum of the steering wheel torque ($C_{volant}$) and of the assist torque ($C_{assist}$) remains lower than or equal to a predetermined critical operating torque ($C_{critique}$), said method being such as, during the monitoring step (b), a delay criterion (b1) is applied according to which there is set, as a condition to the triggering of the assist reduction step (c), the holding of the indicator signal at a level greater than or equal to the alert threshold (C1) during a predetermined delay time ($\Delta t_1$), said method being **characterized in that** the indicator signal used for the comparison to the alert threshold (C1) and for the delaying during the monitoring step (b) corresponds to the intensity of the electrical current applied to the assist motor (12).

2. The method according to claim 1 **characterized in that** there is provided an assistance law which associates, to any non-zero steering wheel torque value ($C_{volant}$), a setpoint intensity applicable to the assist motor, said law reaching its upper limit at a predetermined maximum value as soon as the steering wheel torque ($C_{volant}$) reaches its alert threshold (C1), and **in that** the assist reduction step (c) is triggered if it is found, during the monitoring step (b), that the intensity of the electric current applied to the assist motor (12) reaches and remains at the maximum level provided by said assistance law for the delay time ($\Delta t_1$).

3. The method according to claim 1 or 2 **characterized in that** the alert threshold (C1) corresponds to a steering wheel torque intensity ($C_{volant}$) selected between 6 N.m and 10 N.m, and preferably between 6 N.m and 7 N.m.

4. The method according to any of claims 1 to 3 **characterized in that** the monitoring (b) and assist reduction (c) steps follow an assistance law which defines the assist torque ($C_{assist}$) as a preferably concave increasing function of steering wheel torque ($C_{volant}$) until the alert threshold (C1), then as a decreasing function of said steering wheel torque ($C_{volant}$) beyond said alert threshold (C1).

5. The method according to any of the preceding claims **characterized in that** the predetermined delay time ($\Delta t_1$) is substantially in the range from 1 s to 2 s.

6. The method according to any of the preceding claims **characterized in that** it comprises an evaluation step (d) of the speed of the vehicle, during which the progression speed of the vehicle ($V_{vehic}$) is evaluated, and **in that**, during the monitoring step (b), a criterion (b2) of non-exceeding of speed is applied, according to which there is set, as trigger condition of the assist reduction step (c), the fact that the progression speed of the vehicle ($V_{vehic}$) is lower than or equal to a predetermined speed threshold (V1), preferably substantially zero.

7. The method according to any of the preceding claims **characterized in that** it comprises an evaluation step (e) of the rotation speed of the steering wheel, during which is evaluated the rotation speed ($\omega_{volant}$) of the steering wheel (2) that the driver gives to said steering wheel (2) by operating it, and **in that**, during the monitoring step (b), a criterion (b3) of non-exceeding of steering wheel rotation speed is applied, according to which there is set, as trigger condition of the assist reduction step (c) the fact that the rotation speed of the steering wheel ($\omega_{volant}$) is lower than or equal to a predetermined rotation speed threshold ($\omega_1$), preferably in the range from 1 rev/min to 2 rev/min, or even substantially zero.

8. The method according to any of the preceding claims **characterized in that**, during the assist reduction step (c), the supply setpoint of the assist motor is reduced by at least 10%, preferably at least 20%, at least 30%, at least 40%, or even at least 50%, relative to the assist setpoint value ($C_{pic}$) which was reached when the indicator signal has crossed the alert threshold (C1).

9. The method according to any of the preceding claims **characterized in that**, during the assist reduction step (c), the supply setpoint of the assist motor (12) is gradually reduced , according to a monotonic decreasing function of the time and/or indicator signal, preferably according to a decreasing ramp (17) leading to a stage (18) which may be located for example at least 10%, at least 20%, at least 30%, at least 40 %, or even at least 50% below the starting point ($C_{pic}$) of said ramp (17).

10. The method according to any of the preceding claims **characterized in that** the critical operating torque ($C_{critique}$) is selected such that it corresponds to the quotient of the permissible maximum torque by the steering ($C_{max\_admissible}$), beyond which would be caused the plastic buckling of the mechanically weakest member of said steering (1), for example one of the steering connecting rods (5, 6), divided by a safety factor (k) comprised between 1.15 and 1.35 : Critique = 1/k * $C_{max\_admissible}$, with $1.15 \leq k \leq 1.35$.

11. A steering assist module (11) comprising a calculator (14) programmed to implement the servo-control method according to any one of the preceding claims.

12. A motor vehicle **characterized in that** it is equipped with a steering assist module (11) according to claim 11.

13. A computer-readable data medium comprising code elements of a computer program designed to implement a steering module servo-control method according to any one of claims 1 to 10 when said program is executed by a computer.

EP 2 914 473 B1

Fig. 1

Loi d'assistance

Fig. 2

Fig. 3

Fig. 4

**EP 2 914 473 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1772349 A